# EUROPEAN PATENT APPLICATION

(11) **EP 1 655 865 A2**
(43) Date of publication of application: **10.05.2006**
(21) Application number: 05024319.5
(22) Date of filing: 08.11.2005
(51) Int. Cl.: H04B 10/10

(54) **Data tranfer method using infrared data association**

(30) Priority: 08.11.2004 KR 2004090583
(71) Applicant: Samsung Electronics Co., Ltd., Suwon-si, Gyeonggi-Do (KR)
(72) Inventor: Lee, Chang-Ho, Yeongtong-gu Suwon-si Gyeonggi-do (KR); Jeong, Khi-Soo, Yeongtong-gu Suwon-si Gyeonggi-do (KR)
(74) Representative: Grünecker, Kinkeldey, Stockmair & Schwanhäusser Anwaltssozietät

(57) **Abstract**

A data transfer method using infrared data association is provided. The method includes the steps of connecting with an external infrared data association device, to which a data packet is transferred; transferring a data transfer start command message informing of data transfer start, to the external infrared data association device; sequentially transferring at least one data packet to be transferred, to the external infrared data association device; and transferring a data transfer end command message informing of data transfer end, depending on completion of data transfer.

## Description

The present invention relates generally to infrared data association, and in particular, to a data transfer method using infrared data association. The present invention also relates to a corresponding apparatus.

In recent years, owing to popularization of portable equipments such as personal digital assistants (PDAs), and portable phones, infrared data association (Irda) is used for local area data transfer between portable equipment. In infrared data association using an infrared ray, a point-to-point data association is performed between portable equipment. Infrared data association is widely used for data exchange between portable equipment on a point-to-point basis. For example, infrared data association allows portable phones to mutually exchange a phonebook, music, and a variety of user data stored in the portable phones.

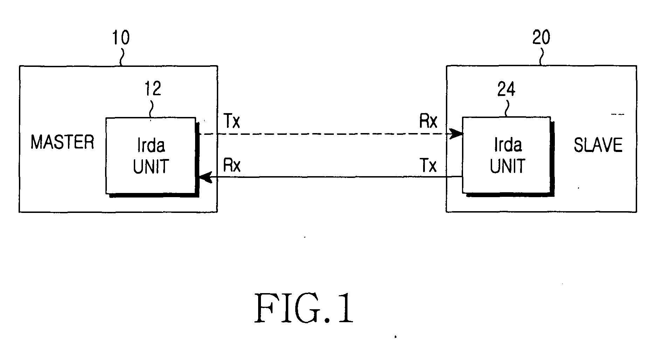

An infrared data association system for the infrared data association will now be described. FIG 1 is a block diagram illustrating a general infrared data association system. Referring to FIG 1, the infrared data association system is comprised of a master 10 and a slave 20. The master 10 is an infrared data association device acting as a transmitting party, and the slave 20 is an infrared data association device acting as a receiving party. The master 10 and the slave 20 include infrared data association units 12 and 24, respectively. The master 10 and the slave 20 transmit (Tx) or receive (Rx) data packets in an infrared ray format through the infrared data association units 12 and 24.

In the conventional infrared data association system, each of the data packets is transmitted and received through processes of Irda activation, device discovery, negotiation, connection, data transfer, disconnection, and Irda deactivation.

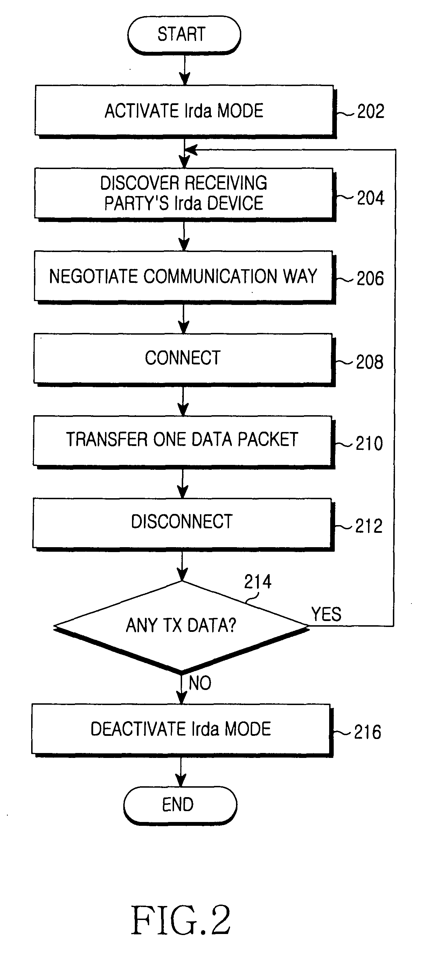

A data transfer method using the infrared data association at FIG. 1 is shown in FIG. 2, which is a flowchart illustrating a conventional data transfer method. Referring to FIGs. 1 and 2, the master 10 activates an infrared data association mode to transmit a data packet in step 202. To do so, the master 10 applies a power source to the infrared data association unit 112 to activate the infrared data association mode (Irda activation).

After that, the master 10 discovers the receiving party's infrared data association device, that is, the slave 20 in step 204. The slave 20 transfers a discovery reply signal to the master 10 in response to a discovery signal from the master 10. The master 10 recognizes the slave 20 depending on the discovery reply signal of the slave 20 (Device discovery).

Next, the master 10 negotiates a particular communication path with the slave 20 in step 206. At this time, the master 10 negotiates the communication path to communicate with the slave 20, among a plurality of communication paths (Negotiation).

Next, the master 10 and the slave 20 are mutually connected in the particular negotiated communication path in step 208 (Connection).

After that, the master 10 transfers the data packet in step 210. Usually the master 10 transfers one data packet to the slave 20 (Data transfer).

After the completion of the data transfer, the master 10 disconnects with the slave in step 212 (Disconnection).

Next, the master 10 determines whether there is any data packet to be transferred in step 214. If it is determined that there is no data packet to be transferred, the master 10 deactivates the infrared data association mode in step 216. (Irda deactivation) However, if there is any data packets to transfer, the master 10 returns to step 204 and repeats the steps 204 to 214.

In the conventional data transfer, only one data packet is transferred each time. Where several data packets are transferred, steps 204 to 212 are repeated for each packet.

For example, to transfer ten data packets, steps 204 to 214 are performed ten times. The conventional data transfer method is not problematic when only one data packet is transmitted and received between the master 10 and the slave 20. However, where several data packets are transmitted and received, the processes of device discovery, negotiation, connection, data transfer and disconnection are repeated in steps 204 to 212 for each data packet, thereby decreasing the data transfer rate.

It is the object of the present invention to provide a data transfer method using infrared data association in which several data packets are all transferred at the same time through one-time connection, thereby increasing a transfer rate.

This object is solved by the subject matter of the independent claims.

Preferred embodiments are defined by the subject matter of the dependent claims.

It is an aspect of the present invention to provide a data transfer method using infrared data association in which when several data packets are transferred, processes of device discovery, negotiation, connection and disconnection are performed only one time, thereby increasing a data transfer rate.

It is another aspect of the present invention to provide a corresponding apparatus.

To achieve the above, there is provided a data transfer method using infrared data association, the method including connecting with an external infrared data association device, to which a data packet is transferred; transferring a data transfer start command message informing of data transfer start, to the external infrared data association device; sequentially transferring at least one data packet to be transferred, to the external infrared data association device; and transferring a data transfer end command message informing of data transfer end, depending on completion of data transfer.

The present invention will become more apparent from the following detailed description when taken in conjunction with the accompanying drawings in which:
FIG 1 is a block diagram illustrating a general infrared data association system;
FIG 2 is a flowchart illustrating a conventional data transfer method using infrared data association;
FIG. 3 is a flowchart illustrating a data transfer method using infrared data association according to an embodiment of the present invention; and
FIG. 4 is a view illustrating a command type used for a data transfer method using infrared data association according to an embodiment of the present invention.

A preferred embodiment of the present invention will now be described in detail with reference to the annexed drawings. In the following description, a detailed description of known functions and configurations incorporated herein has been omitted for conciseness.

In a data transfer method using infrared data association according to an embodiment of the present invention, several data packets are all transferred at the same time using a data transfer start command and a data transfer end command. Accordingly, whenever each data packet is transferred, the processes of device discovery, negotiation, connection, data transfer and disconnection are not repeated.

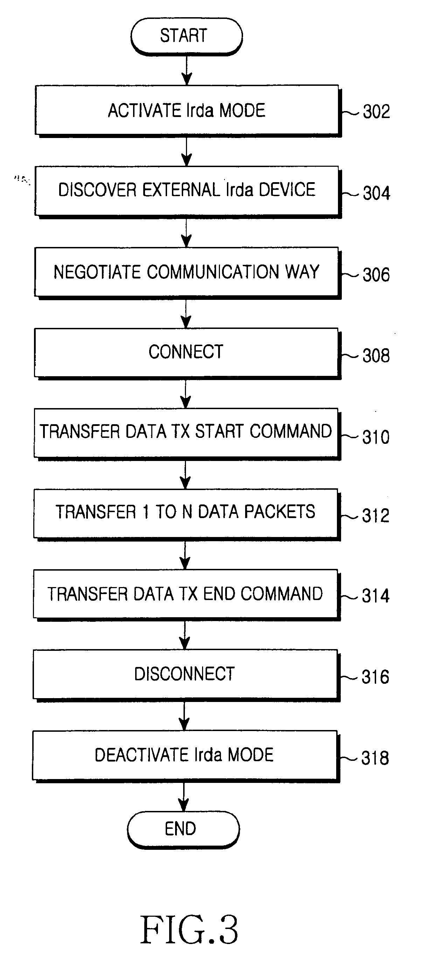

FIG. 3 is a flowchart illustrating the data transfer method using the infrared data association according to an embodiment of the present invention.

Applying the method of FIG. 3 to the conventional system of FIG 1, a master 10 applies a power source to an infrared data association unit 112 and activates an infrared data association mode to transmit the data packet in step 302 (Irda Activation).

After that, in step 304, the master 10 discovers a receiving party's external infrared data association device, that is, a slave 20 transferring the data packet (Device discovery).

After the discovery of the slave 20 is completed, the master 10 negotiates a communication type with the discovered slave 20 in step 306. That is, the master 10 negotiates an optimal one of a variety of communication types supported, for communication with the slave 20 (Negotiation).

Next, the master 10 is connected with the slave 20 in the negotiated communication type in step 308 (Connection).

After the master 10 is connected with the slave 20, the master 10 transfers a data transfer start command message (Start_Command) to the slave 20 in step 310.

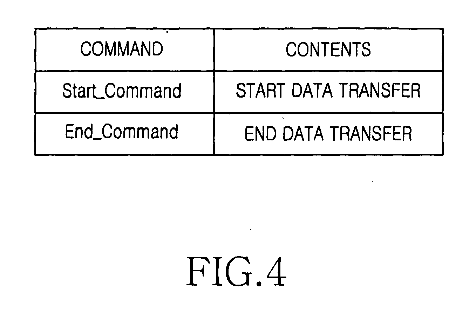

The inventive command message is shown in FIG. 4. FIG 4 illustrates a command type used for the data transfer method using the infrared data association according to an embodiment of the present invention.

Referring to FIG 4, the inventive command message type includes the data transfer start command message ("Start_Command") and a data transfer end command message ("End_Command"). The data transfer start command message ("Start_Command") indicates a data transfer start and the number of data packets to be transferred. The data transfer start command message allows the slave 20 to continuously maintain a connection with the master 10. The data transfer end command message informs that the master 10 has transmitted all of the data packets to be transferred, and allows the slave 20 to disconnect with the master 10.

The data transfer start command message and the data transfer end command message can be constituted to have one format of an object type illustrating whether the data packet is a phonebook, a calendar, a file, or the like.

After the master 10 transfers the data transfer start command message, the master 10 sequentially transfers several (1 to N) data packets to the slave 20 in step 312. Since the data transfer start command message allows the slave 20 to continuously maintain a connection state with the master 10, the slave 20 continuously receives several data packets without disconnecting.

After the master 10 transfers all of the data packets through the above procedure, it generates and transfers the data transfer end command message to the slave 20 in step 314. Then, the slave 20 disconnects with the master 10 in response to the data transfer end command message.

After the master 10 transfers the data transfer end command message to the slave 20 as described above, the master 10 disconnects with slave 20 in step 316 and deactivates the infrared data association mode in step 318.

As described above, in the inventive data transfer method using the infrared data association, the plurality of, for example, (1 to N) data packets are all transferred at the same time using the data transfer start command message and the data transfer end command message. As a result, the transfer rate can be increased.

As shown in FIG 4, it is preferable that the data transfer command messages are predefined between the master 10 and the slave 20 to apply the data transfer method according to an embodiment of the present invention.

As described above, the inventive data transfer method using infrared data association allows several data packets to be transferred at the same time using the data transfer command message, thereby increasing speed and efficiency of data transfer.

Further, the present invention has an effect in that when the data packet is transferred using the infrared data association, the processes of device discovery, negotiation, connection, data transfer, and disconnection are performed once without repetition to transfer the data packet, thereby increasing data transfer speed.

While the invention has been shown and described with reference to a certain preferred embodiment thereof, it will be understood by those skilled in the art that various changes in form and details may be made therein without departing from the scope of the invention as defined by the appended claims.

## Claims

1. A data transfer method using infrared data association, the method comprising the steps of:
connecting with an external infrared data association device;
transferring a data transfer start command message indicating data transfer start, to the external infrared data association device;
sequentially transferring at least one data packet, to the external infrared data association device; and
transferring a data transfer end command message informing of data transfer end, upon completion of data transfer.

2. The method of claim 1, further comprising the step of disconnecting with the external infrared data association device and deactivating an infrared data association mode after the data transfer end command message is transferred.

3. The method of claim 1 or 2, wherein the data transfer start command message indicates the number of the data packets to be transferred.

4. The method of one of claims 1 to 3, wherein the data transfer end command message indicates that the data packets are all transferred.

5. The method of one of claims 1 to 4, wherein the external infrared data association device receives the data transfer start command message, and continuously maintains a connection state depending on the data transfer start command message.

6. The method of one of claims 1 to 5, wherein the external infrared data association device receives the data transfer end command message and disconnects depending on the data transfer end command message.

7. The method of one of claims 1 to 6, wherein the data transfer start command message and the data transfer end command message have a format of an object type that represents a type of the data packet to be transferred.

8. An apparatus for transferring data by using infrared data association, wherein the apparatus comprises:
means for connecting with an external infrared data association device;
means for transferring a data transfer start command message indicating data transfer start, to the external infrared data association device;
means for sequentially transferring at least one data packet, to the external infrared data association device; and
means for transferring a data transfer end command message informing of data transfer end, upon completion of data transfer.

9. The apparatus of claim 8 adapted to be operated according to one of claims 1 to 7.
